Europäisches Patentamt

European Patent Office

Office européen des brevets

(19)

(11) EP 0 594 474 B1

# (12) FASCICULE DE BREVET EUROPEEN

(45) Date de publication et mention
de la délivrance du brevet:
**31.01.1996 Bulletin 1996/05**

(51) Int Cl.6: **G01S 5/22**, G01S 3/808

(21) Numéro de dépôt: **93402391.2**

(22) Date de dépôt: **30.09.1993**

(54) **Procédé et dispositif de trajectographie passive d'objets sous-marins**

Verfahren und Gerät zur passiven Bahnverfolgung von Unterwasserobjekten

Procedure and apparatus for passive trajectory determination of underwater objects

(84) Etats contractants désignés:
**DE GB IT**

(30) Priorité: **08.10.1992 FR 9211944**

(43) Date de publication de la demande:
**27.04.1994 Bulletin 1994/17**

(73) Titulaire: **ETAT FRANCAIS**
**Représenté par le délégué général pour**
**l'armement**
**F-00460 Armées (FR)**

(72) Inventeurs:
• **Jestin, Vincent**
**F-83100 Toulon (FR)**
• **Becera, Richard**
**F-83400 Hyeres (FR)**
• **Charpentier, Etienne**
**F-83000 Toulon (FR)**
• **Filipowicz, Alain**
**F-83000 Toulon (FR)**

(56) Documents cités:
EP-A- 0 288 374          FR-A- 2 654 945
US-A- 3 764 964          US-A- 4 639 900

EP 0 594 474 B1

## Description

La présente invention a pour objet un procédé et un dispositif de trajectographie passive d'objets sous-marins.

Le secteur technique de l'invention est le domaine de la télémétrie acoustique.

Une des applications principales de l'invention est de pouvoir connaître, en temps réel, la trajectoire suivie par un mobile marin, à partir des bruits propres rayonnés par ce dernier, lors par exemple de phases d'essais de matériel autopropulsés pour en connaître les performances, tel qu'en effet, deux familles de procédés et dispositifs de suivi de trajectoire :

- l'une est la seule utilisée à ce jour pour établir des trajectographies fines, comme dans les centres d'essais ou sur des sites offshore encombrés; elle regroupe des équipements de télémétrie active comprenant des émetteurs situés sur le mobile, qui produisent suivant des intervalles de temps donnés, des ondes acoustiques dans une fréquence ou un spectre de fréquences données, permettant de les identifier facilement et de les recueillir par des récepteurs disposés uniformément et individuellement, d'une manière fixe sur le site. Par traitement des signaux reçus, on peut déduire la position du mobile à tout instant et, de proche, sa trajectoire.

Ainsi, le brevet US 3764964 décrit un dispositif de trajectographie active comportant un émetteur disposé sur un mobile dont la trajectoire est à déterminer et des moyens de réception, ces moyens comportant huit capteurs immergés capables de transformer les ondes émises par l'émetteur en signaux électriques, ces capteurs étant disposés par paire dont on connaît précisément la position relative, et une unité centrale de calcul recevant lesdits signaux et capable de les traiter.

L'inconvénient majeur de ces systèmes est de nécessiter l'installation d'un émetteur sur le mobile, ce qui pose des problèmes d'encombrement et limite alors ses performances, avec en plus des risques de pannes ou de niveaux d'émissions trop faibles, des perturbations des autodirecteurs qui peuvent être installés éventuellement sur les mobiles comme à bord des torpilles, une complication des procédures de mise en oeuvre à la mer, etc..., sans oublier le problème de la gestion des stocks de ces émetteurs.

- L'autre famille dans laquelle se situe la présente invention est utilisée à ce jour essentiellement pour la détection passive des menaces que peut avoir à subir un site ou un engin sous-marin, de la part d'autres mobiles : Il s'agit de repérer alors tout bruit environnant suspect, de tenter d'en identifier la source et d'établir si la direction de déplacement de celle-ci ne converge pas vers le site ou l'engin concerné; cette fonction d'alerte se contente de mesures assez grossières, même si des améliorations ont été apportées, dont certaines ont fait l'objet de dépôts de demandes de brevet : telles celles EP-A-0 063 517 et EP-A-0 288 374 correspondant aux demandes respectives No. FR .2.504.275 déposée le 15 Avril 1981 et No. FR. 2.614.427 déposée le 24 Avril 1987 par la société THOMSON CSF sur des "procédés et systèmes de télémétrie sonore passive utilisant trois capteurs récepteurs alignés" : on traite les trois signaux ainsi reçus en prenant celui du récepteur central comme référence pour calculer les retards des deux autres et corréler l'ensemble.

Les procédés et dispositifs de cette deuxième famille ne permettent pas cependant de connaître avec précision l'endroit où se situe l'engin que l'on a repéré et que l'on veut positionner à tout instant afin d'en connaître les caractéristiques précises de trajectoire, car il néglige beaucoup de facteurs, tel qu'en particulier l'instantionnarité et l'anisotropie des bruits rayonnés par celui-ci : en effet, la combinaison des bruits produits par le ou les moteurs embarqués, l'écoulement de fluide autour de sa coque, la cavitation du ou des hélices, les vibrations internes etc... ne peuvent pas être stables dans le temps, ni homogènes dans toutes les directions. Ce qui veut dire qu'un observateur immobile par rapport à l'engin voit deux spectres différents à deux instants différents, et qu'il en est de même pour deux observateurs placés en des points différents à un même instant.

De plus, que ce soit en mode actif ou en mode passif, dans les deux familles de procédés et de dispositifs de suivi de trajectoires rappelés ci-dessus, on néglige toujours le fait que l'engin est en mouvement : or en ce cas, le signal reçu, qu'il soit d'origine propre à l'engin mobile, ou en provenance d'un émetteur embarqué, par un observateur, est alors affecté par l'effet Doppler; pour obtenir des signaux corrélés, il faudrait pourtant les traiter en leur affectant un coefficient Doppler approprié, mais celui-ci par définition est inconnu lors de la détection initiale.

Compte tenu de toutes façons de l'imprécision de l'ensemble des mesures telles que rappelées ci-dessus, et la lourdeur et la lenteur des calculs de corrélation qui ne permettraient pas alors un suivi en temps réel avec les procédés et dispositifs connus, on néglige à ce jour cet effet Doppler, ce qui ne permet pas d'autant plus de connaître avec précision la trajectographie recherchée.

Le problème posé est de pouvoir définir des procédés et des dispositifs de trajectographie passive sur des polygones ou sites sous-marins, permettant de suivre un mobile se déplaçant en direction ou au milieu de ceux-ci, avec une bonne précision, tant en coordonnées géométriques qu'en vitesse et accélération, et tenant compte, tant de l'effet Doppler provoqué par sa vitesse que des facteurs d'anisotropie et d'instationnarité du bruit propre rayonné par le mobile.

Une solution au problème posé est un procédé de trajectographie passive d'objets sous-marins utilisant des capteurs immergés, capables de transformer les ondes sonores émises par ledit objet en signaux électriques, et une unité centrale de calcul recevant lesdits signaux et capable de les traiter, dans lequel :

- on relève à des intervalles de temps définis et donc connus, les signaux S1 et S2, en provenance de deux desdits capteurs, qui constituent alors une paire, et dont on connaît la distance qui est choisie plus faible que celle qui les sépare des autres hydrophones, et la direction précise de leur alignement;
- on choisit l'un desdits signaux S1 comme référence, reçu à un temps t1 d'un desdits hydrophones et on relève le signal S2 présumé représentatif de la même onde sonore, émise au même moment d'origine t0 par ledit objet, et reçu de l'autre hydrophone à un temps t2 évalué en fonction d'un retard estimé et lié à la direction "d" présumée de l'objet à l'instant donné de la mesure par rapport à l'alignement de la paire d'hydrophones;
- on corrige ce deuxième signal S2 en fonction de la vitesse présumée de l'objet à l'instant t0, pour tenir compte de l'effet Doppler, et on rectifie les données présumées ci-dessus jusqu'à obtenir la valeur maximum d'une fonction d'intercorrélation entre les signaux S1 et S2;
- on recommence l'opération de mesure et de calcul après l'intervalle de temps suivant, de durée définie et connue, en prenant les données corrélées et corrigées de l'intervalle de temps précédent, que l'on affecte de valeurs estimées d'incrémentation, extrapolées en fonction de la trajectoire parcourue pour l'objet et calculée par les intervalles de temps précédents.

Dans un mode de réalisation préférentiel on utilise au moins trois paires desdits capteurs disposés en des positions connues les uns par rapport aux autres : on compile les résultats obtenus suivant le procédé défini ci-dessus avec chaque paire, d'une part pour les direction "d" d'émission qui définissent pour chacune de ces paires un cône axé sur leur axe d'alignement, et dont l'intersection donne le point où se trouve l'objet, et d'autre part, pour les composantes de vitesse qui sont les valeurs, projetées sur les perpendiculaires à chaque direction "d" de la vitesse réelle de l'objet, dont on connaît alors par recomposition la direction d'avancement et la valeur propre.

Pour alléger les capacités de l'unité de calcul et accélérer l'obtention des résultats en vue d'une trajectographie suivie en temps réel, on numérise les signaux transmis par les hydrophones dans la gamme la plus significative de fréquences d'ondes émises par ledit objet, et on rend lesdits signaux homogènes et cohérents par une opération de blanchiment permettant de s'affranchir de la puissance desdits signaux pour n'en retenir que le contenu informationnel.

Le résultat est de nouveaux procédés et dispositifs de trajectographie d'objets sous-marins utilisant des méthodes de détection de mesures et de traitement de bruit rayonné, dites passives et répondant au problème posé ci-dessus.

Sur le plan du problème évoqué précédemment de l'instationnarité du bruit, si l'on imagine un engin immobile dont le bruit propre est donc instationnaire, mais isotrope dans un milieu de propagation parfait, à un instant donné, le signal émis par l'engin aura un certain spectre et à un autre instant différent, il aura un spectre également différent.

On imagine donc bien qu'un observateur, placé à un point connu et capable de reconnaître à chaque instant le spectre des signaux qu'il reçoit puisse noter la date à laquelle il reçoit, chaque signal.

Le problème est alors le même qu'en trajectographie active, sauf que pour connaître alors la position du bruiteur, il reste à déterminer quatre inconnues au lieu de trois, à savoir le temps to de l'instant d'émission et les trois coordonnées de la position du mobile à cet instant; il suffit donc en théorie de disposer de quatre observateurs, ou donc de quatre hydrophones, ou capteurs, pour résoudre complètement le système.

De manière pratique, on prend comme spectre de référence celui reçu par un hydrophone à un instant donné, puis en effectuant pour chaque autre hydrophone l'intercorrélation entre le signal reçu et celui de référence, on détermine le retard de propagation qui correspond au maximum d'intercorrélation. Avec quatre retards, on peut donc résoudre le système.

Si on examine le cas d'un engin en mouvement, le problème est alors complètement différent, car le signal reçu par les observateurs est alors affecté par l'effet Doppler, et deux observateurs placés en deux endroits différents reçoivent deux signaux différents, même s'ils sont émis par la même onde sonore : pour obtenir les signaux corrélés, il faut les traiter en leur affectant leur coefficient Doppler approprié; cependant, ce coefficient est inconnu dans la pratique, mais on peut l'estimer à partir des positions antérieures du mobile, et ce d'autant mieux que le pas d'échantillonnage est faible devant la dynamique de l'engin.

D'un point de vue purement de calcul, ces intercorrélations sont très lourdes : aussi pour alléger les temps de calcul, il faut estimer le retard de propagation et le Doppler par interpolation des positions précédentes et cherché le maximum autour de cette prévision.

Lors d'essais réalisés suivant le procédé suivant l'invention, ce traitement de l'effet Doppler tel que défini également dans les pages suivantes, a donné de bons résultats, car la vitesse des mobiles sous-marins reste toujours faible devant celle du son dans l'eau.

Par ailleurs, le problème de l'anisotropie du bruit émis par l'engin sous-marin a deux origines principales : d'une part, du fait de la géométrie même de l'engin, il est clair qu'on ne va pas percevoir le même bruit en tout point d'observation, comme par exemple, on va entendre davantage les hélices vers l'arrière que vers l'avant, et d'autre part, le milieu marin dans lequel il évolue est lui aussi anisotrope, et la propagation du son est différente suivant les trajectoires suivies.

En conséquence, en deux points différents, on va percevoir des bruits différents : cependant, si ces deux points sont suffisamment proches, comme c'est le cas pour les capteurs d'une paire telle que définie dans la présente invention, ils vont recevoir quasiment le même bruit. En termes mathématiques, cela se traduit par le fait que pour deux points suffisamment proches, les bruits sont corrélés et on peut donc obtenir des pics d'intercorrélation et par là les retards de propagation cherchés malgré l'anisotropie du bruit rayonné.

Cette solution permet également de réduire les temps de calculs, car la plage d'estimation des retards et des Doppler est beaucoup plus faible pour des hydrophones voisins, et l'expérience a montré qu'en trois ou quatre itérations on convergeait vers la solution. D'autre part, elle permet également d'initialiser le procédé par une méthode itérative qui donne des résultats fiables assez rapidement.

Des essais réalisés suivant des dispositifs et des procédés suivant l'invention ont permis de vérifier la faisabilité de celle-ci et, d'une part, dans le domaine de la rapidité de calcul de tendre vers le temps réel, et d'autre part, d'envisager de suivre des trajectrographies multicibles; en effet, avec un calculateur équipé de cartes vectorielles et une architecture parallèle, on pense qu'il ne faudra que 2 secondes de calcul environ, ce qui tend effectivement à une trajectographie en temps réel.

Il est à noter aussi que les procédés et les dispositifs suivant l'invention, dont l'application est essentiellement en trajectographie passive, peuvent être également utilisés en trajectographie active bien sûr.

On pourrait citer d'autres avantages de la présente invention, mais ceux cités ci-dessus en montrent déjà suffisamment pour en démontrer la nouveauté et l'intérêt.

La description et les figures ci-après représentent un exemple de réalisation de l'invention, mais n'ont aucun caractère limitatif : d'autres réalisations sont possibles dans le cadre de la portée et de l'étendue de la présente invention, en particulier en utilisant des fonctions d'intercorrélation, d'ambiguïté et de blanchiment adaptées à l'invention telle que définie et qui sont développés que partiellement à titre d'exemple ici.

La figure 1 est une vue en plan simplifiée d'un dispositif suivant l'invention.

La figure 2 est un schéma géométrique des données connues et des paramètres inconnus permettant de réaliser les calculs du procédé suivant l'invention.

La figure 3 est un schéma synoptique du procédé.

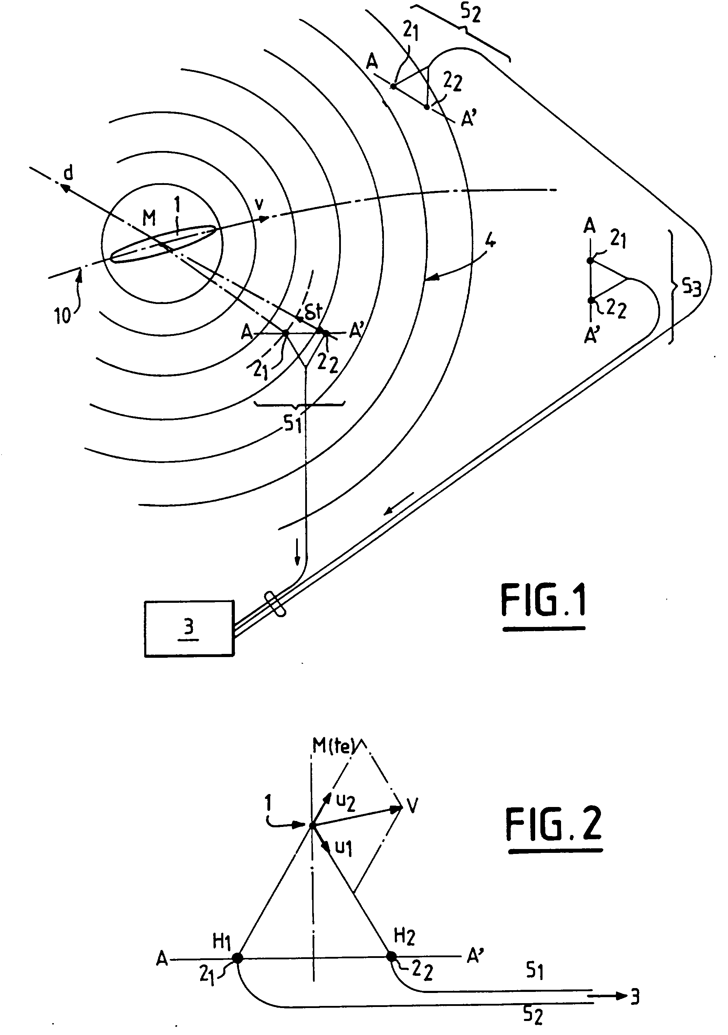

La figure 1 représente un dispositif de trajectographie passive d'objet sous-marin 1, installé par exemple sur un site d'essais, et utilisant des capteurs immergés 2 posés au fond de l'eau, sur des structures fixes par exemple et capables de transformer les ondes sonores 4 émises par ledit objet en signaux électriques; une unité centrale de calcul 3 reçoit lesdits signaux et est choisie pour être capable de les traiter suivant les procédés de l'invention.

Ledit dispositif suivant l'invention comporte au moins six capteurs 2 disposés par paire 5, dont on connaît précisément la distance entre les capteurs $2_1$, $2_2$ qui les constituent et la direction de leur alignement AA', ainsi que la position relative desdites paires 5 les unes par rapport aux autres, lesquels capteurs ayant une large bande passante d'écoute d'ondes sonores.

D'une manière préférentielle pour résoudre le problème de l'anisotropie tel que défini précédemment, les capteurs 2 de chaque paire 5 sont distants environ d'une centaine de mètres, et par ailleurs, lesdites paires 5 sont distantes entre elles d'une distance égale à environ la profondeur d'eau sur le site tel que par exemple 500 mètres.

Pour simplifier également les calculs et en accélérer la rapidité, ledites paires 5 sont identiques, et de préférence, d'axes d'alignement AA' orientés :

- pour l'une dans la direction présumée de la trajectoire 10 dudit objet 1, ce qui permet un meilleur calcul du retard sur cette paire d'hydrophone, et donc une meilleure estimation de l'effet Doppler et de la vitesse du mobile;
- et pour les autres suivant des angles de 30 à 60° par rapport à la première pour obtenir un meilleur recoupement des cônes de direction d'émission "d" et donc d'avoir une meilleure précision de position.

La figure 2 est un schéma géométrique des données connues pour une paire 5 constituée de deux capteurs H1 et H2 et des paramètres inconnus du mobile 1 permettant d'expliciter des exemples de procédé de calculs suivant l'invention .

Si on appelle H1 et H2 l'ensemble des trois coordonnées des hydrophones $2_1$ et $2_2$, "c" la vitesse moyenne de propagation du son dans l'eau et M(te) la position du mobile estimée et présumée, considérée à l'instant d'émission estimé $t_0$ ou $t_e$, le temps de réception $t_{r1}$, estimé également, pour l'hydrophone $2_1$ par exemple, du signal supposé émis à cet instant $t_e$ par le mobile, estimé être placé en M, est

$$t_{r1} = t_e + \frac{MH_1}{c}$$

L'objectif du procédé suivant l'invention est donc de chercher la position exacte M du mobile correspondant à tout instant t et répondant à l'équation ci-dessus.

Le retard de réception du signal $S_2$ de l'hydrophone $2_2$ tel que transmis à l'unité centrale 3 est donc égale à : $\delta t = tr1 - tr2$.

Le coefficient Doppler de l'hydrophone 1 est égal à :

$$D_1(t) = \frac{\overrightarrow{V(t)} \cdot \overrightarrow{U_1(t)}}{c} \text{ où } \overrightarrow{U_1(t)} = \frac{\overrightarrow{MH_1(t)}}{\overline{MH_1(t)}}$$

Il en est de même pour le coefficient Doppler de l'hydrophone 2 affecté de l'indice correspondant.

Le Doppler différentiel de la paire 5 d'hydrophones $2_1$ et $2_2$ est défini par

$$DD_{1,2}(t) = \frac{1 - D_1}{1 - D_2} - 1$$

Si le mobile 1 placé en M était fixe, le signal $S_1(t)$ serait égal à :

$$S(t) = S(t - \frac{MH_1}{c})$$

mais étant animé d'une vitesse V, l'effet Doppler transforme le signal $S(t)$ en signal $S_1(t)$ par une fonction $g_1$ telle que :

$$g_1(t) = \frac{1}{1 - D_1}(t - t_{r1}) + t_e$$

où t est l'instant d'émission proprement dit et pour t voisin de $t_{r1}$, ainsi :

$$S_1(t) = S\left(\frac{1}{1 - D_1}(t - t_{r1}) + t_e\right)$$

Soit, pour le signal $S'_1(t)$ perçu par l'hydrophone 1 et translaté du temps de réception estimé par rapport au signal d'origine $S_1$ :

$$S'_1(t) = S_1(t + t_{r1}) = S\left(\frac{1}{1 - D_1}t + t_e\right)$$

pour t voisin de 0.

Pour comparer alors $S'_2(t)$ de l'hydrophone $2_2$ et $S'_1(t)$ de l'hydrophone $2_1$, il faut construire à la place du signal $S'_1(t)$ ci-dessus le signal :

$$S''_1(t) = S'_1(h_{1,2}(t))$$

$h_{1,2}$ étant définie ainsi:

$$h_{1,2}(t) = \frac{1 - D_1}{1 - D_2}t = (1 + DD_{1,2})t$$

Nous voyons donc que la correction à apporter ne coïncide pas avec la notion couramment répandue de Doppler différentiel qui est simplement la différence des coefficients Doppler.

Le signal $S'_1(t)$ étant sous forme numérique $S'_1(k.\Delta T)$ où $\Delta T$ est la période d'échantillonnage, suivant les intervalles de temps connus et donnés, tels que définis précédemment, il est nécessaire de calculer les valeurs de $S''_1(t) = S''_1(k.\Delta T) = S'_1(h_{1,2}(k.\Delta T))$ par interpolation.

Différents tests au niveau de cette interpolation ont été réalisés et il est apparu qu'une interpolation au second ordre voire même linéaire était largement suffisante, et qu'une interpolation plus fine n'apportait pas d'amélioration notable. La position des valeurs à interpoler n'étant pas exacte à cause de l'approximation linéaire au niveau du développement de MH(t), il est donc inutile de calculer avec une très grande précision les valeurs pour lesquelles la position est entachée d'une erreur.

Pour déterminer le retard de perception entre les récepteurs ou capteurs ou hydrophones, H1 et H2, ou $2_1$ et $2_2$, on compare les signaux $S''_1(t)$ et $S'_2(t)$ en réalisant leur intercorrélation pour t voisin de 0, c'est à dire proche du moment d'émission, l'abscisse du maximum correspondant alors au retard recherché. En effet, lors de l'émission, les deux signaux qui seront reçu par les hydrophones ne font qu'un, leur interdépendance est maximale, ce qui est mathématiquement exprimée par une intercorrélation maximale.

Il serait possible de calculer la fonction d'intercorrélation de façon directe en calculant l'intégrale définie par le coefficient d'intercorrélation $C_{S''_1 S'_2}(\tau)$ entre $S''_1$ et $S'_2$ soit :

$$Cs''_1 s'_2(\tau) = \frac{1}{T}\int_0^T S''_1(t) \cdot S'_2(t - \tau) \cdot dt$$

Mais cette méthode directe d'estimation de la fonction d'intercorrélation demande un temps de calcul considérable lorsque les temps d'intégration et la plage de recherche des retards sont importants.

Dans un soucis de rapidité de calcul, il peut être choisi pour l'estimation de la fonction d'intercorrélation la méthode consistant à prendre la transformée de Fourier inverse de l'interspectre. Ce dernier peut être estimé par la méthode du périodigramme par moyennage de plusieurs estimateurs indépendants, chaque estimation étant obtenue sur des tranches de signal, de durée donée $\theta$ par exemple, en utilisant un algorithme de transformée de Fourier rapide.

Cette méthode présente l'avantage essentiel d'être beaucoup plus rapide que le calcul direct de l'intégrale, et elle permet également d'obtenir très simplement, en plus de l'interspectre, des estimations de densités spectrales de puissance de chacun des signaux.

Un inconvénient de ce type d'estimation est un risque d'erreur d'autant plus marqué que l'on se trouve aux extrémités du segment $(-\theta,+\theta)$, qui rend les valeurs proches des extrémités inutilisables. Cependant, ceci n'est pas très gênant dans notre cas, car ce n'est pas la fonction d'intercorrélation qui est intéressante dans son ensemble, mais l'abscisse de son maximum qui est normalement proche de l'origine du fait de l'estimation à priori du retard de perception entre les récepteurs H1 et H2 ou $2_1$ et $2_2$.

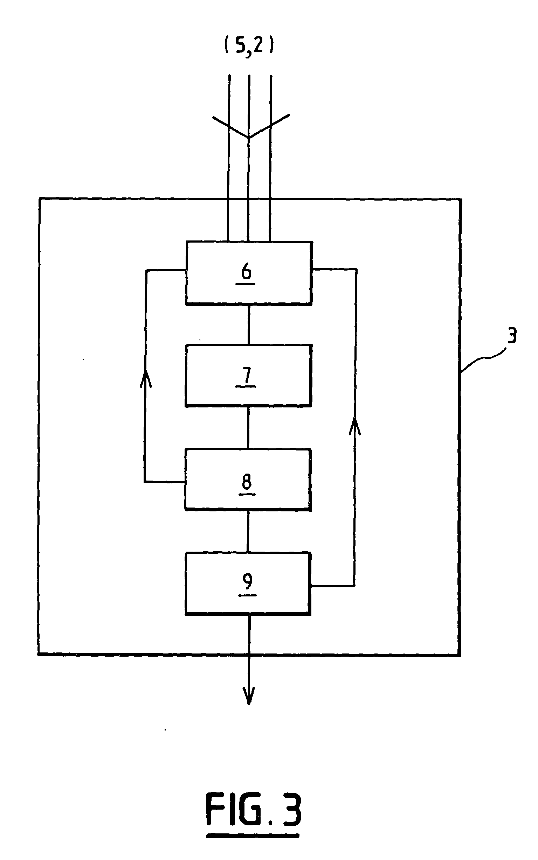

La figure 3 est un schéma synoptique du procédé de traitement des signaux tel que réalisé par l'unité centrale de calcul 3 à partir des six signaux "S" au moins provenant au moins des six capteurs 2 constituant les trois paires 5 définies précédemment.

Une première étape 6 consiste, à partir des conditions initiales à l'instant t0, ou des conditions finales de la période de l'intervalle de temps $\Delta T$ précédent, d'estimer la position M du mobile 1 et sa vitesse à l'instant estimé suivant $t_e$ tel que:

$$\overrightarrow{MoM} = (te - t0)\overrightarrow{V0}$$

$$\vec{V} = \overrightarrow{V0}$$

Dans une deuxième étape 7, on estime les retards, les corrections de Doppler et les différents temps de réception tel que $t_{1,2}$, $DD_{1,2}$, $\tau$ etc...

Dans une troisième étape 8, on détermine les retards proprement dits et le Doppler d'une façon optimale pour pouvoir décaler les signaux d'une valeur la plus proche possible de la réalité, mais la valeur exacte du Doppler différentiel tel qu'il a été défini précédemment, est inconnue, et on a seulement accès à une estimation de sa valeur qu'il faut optimiser pour augmenter le rapport signal/bruit.

Pour déterminer ainsi le couple Doppler différentiel-Retard, pour lequel l'intercorrélation présente un maximum, il est alors nécessaire d'étudier une fonction d'ambiguïté définie par:

$$X_{S'_1 S'_2}(DD,\tau) = \frac{1}{T} \int_{-\frac{T}{2}}^{\frac{T}{2}} S'_1((1+DD)t).S'_2(t-\tau).dt$$

Dans une dernière étape 9, on calcule alors la position M estimée du mobile à l'instant te, ainsi que sa vitesse instantanée V(t) et l'instant de l'émission correspondant à ladite position du mobile 1.

Par compilation des trois résultats obtenus par les signaux venant des trois paires ci-dessus, on peut obtenir ainsi la nouvelle position complète du mobile et sa vitesse, permettant de compléter sa trajectoires : on peut ensuite recommencer l'opération à partir des signaux relevés après l'intervalle de temps connu suivant, à partir des données du point calculé à l'intervalle précédent.

En amont de ce traitement des signaux, comme indiqué précédemment, il peut être procédé à une opération de blanchiment consistant dans son principe à s'affranchir de la notion de puissance au niveau de l'interaction pour ne retenir que le contenu informationnel des signaux par une fonction de cohérence qui permet de supprimer tous les types de filtrage linéaires; de même, on peut numériser les signaux transmis par les hydrophones 2 dans la gamme la plus significative des fréquences d'ondes émises par lesdits objets 1, quand on connaît le type de mobiles susceptibles d'être écoutés, afin de réduire les temps de calcul et de simplifier ainsi celui-ci.

## Revendications

1. Procédé de trajectographie passive d'objets sous-marins (1) utilisant des capteurs immergés (2), capables de transformer les ondes sonores (4) émises par un desdit objets en signaux électriques, et une unité centrale de calcul (3) recevant lesdits signaux et capable de les traiter, caractérisé en ce que, pour chacune d'au moins trois paires de capteurs disposés en des positions connues les uns par rapport aux autres,

- on relève à des intervalles de temps connus, les signaux (S1 et S2) en provenance de deux desdits capteurs (2), qui constituent alors une paire (5), et dont on connaît la distance (2) qui est choisie plus faible que celle qui les sépare des autres hydrophones, et la direction précise de leur alignement (AA');
- on choisit l'un desdits signaux (S1) comme référence, reçu à un temps (t1) d'un desdits hydrophones et on relève le signal (S2) présumé représentatif de la même onde sonore (4), émise au même moment d'origine (T0) par ledit objet (1), et reçu de l'autre hydrophone à un temps (t2) évalué en fonction d'un retard (T) estimé et lié à la direction (d0) présumée de l'objet (1) à l'instant donné de la mesure;
- on corrige ce deuxième signal (S2) en fonction de la vitesse (V0) présumée de l'objet à l'instant (t0), pour tenir compte de l'effet Doppler, et on rectifie les données présumées ci-dessus jusqu'à obtenir la valeur maximum d'une fonction d'intercorrélation entre les signaux (S1 et S2);
- on recommence l'opération de mesure et de calcul après l'intervalle de temps suivant connu, en prenant des données corrélées et corrigées de l'intervalle de temps précédent, que l'on affecte de valeurs estimées d'incrémentation, extrapolées en fonction de la trajectoire (10) parcourue par l'objet et calculée pour les intervalles de temps précédents.
- on compile les résultats obtenus avec chaque paire, d'une part pour les directions d'émission (d) qui définissent pour chacune de ces paires (5) un cône d'axe (AA'), et dont l'intersection donne le point où se trouve l'objet (1), et d'autre part, pour les vitesses qui sont les composantes projetées sur les perpendiculaires à chaque direction (d) de la vitesse réelle de l'objet (1), dont on connaît alors la direction d'avancement et la valeur propre.

2. Procédé de trajectographie suivant la revendication 1, caractérise en ce qu'on numérise les signaux transmis par les hydrophones (2) dans la gamme la plus significative de fréquences d'ondes émises par ledit objet (1).

3. Procédé suivant la revendication 1, caractérisé en ce qu'on rend lesdits signaux homogènes et cohérents par une opération de blanchiment permettant de s'affranchir de la puissance desdits signaux pour n'en retenir que le contenu informationnel.


**Patentansprüche**

1. Verfahren zur passiven Trajektographie von Unterwasser-Körpern (1) unter Anwendung von versenkten Meßfühlern (2), welche in der Lage sind, die von einem der genannten Körper ausgesendeten Schallwellen (4) in elektrische Signale umzuwandeln, sowie eine zentrale Rechnereinheit (3), welche diese Signale erhält und verarbeitet, dadurch gekennzeichnet, daß man für jedes der mindestens drei Paare von in untereinander bekannten Positionen angeordeten Meßfühler:

- in bekannten Zeitabständen die von zwei der genannten Meßfühler (2), die jetzt ein Paar (5) bilden, abgegebenen Signale (S1 und S2) aufzeichnet, wobei sowohl der Abstand (2) zwischen den Meßfühlern, der kleiner ist als die Entfernung, welche sie von den anderen Unterwasserschallempfängern trennt, als auch deren präzise Ausrichtung (AA') bekannt ist;

- eines der erwähnten, zu einem Zeitpunkt (t1) von einem der genannten Unterwasserschallempfängern empfangenen Signale (S1) als Referenz wählt und das als für die gleiche Schallwelle (4) repräsentativ betrachtete, zum gleichen Ursprungszeitpunkt (T0) vom genannten Körper (1) gesendete Signal (S2) aufzeichnet, welches vom anderen Unterwasserschallempfänger zu einem gemäß einer geschätzten und von der Verzögerung (T) bewerteten und mit der angenommenen Richtung (d0) des Körpers (1) zum Zeitpunkt der Messung in Verbindung stehenden Zeitpunkt (t2) empfangen wird;

- dieses zweite Signal (S2) entsprechend der angenommenen Geschwindigkeit (V0) des Körpers zum Zeitpunkt (t0) korrigiert, um den Doppler-Effekt zu berücksichtigen, und die vorstehend aufgeführten angenommenen Daten berichtigt, bis der maximale Wert einer Interkorrelationsfunktion zwischen den Signalen (S1 und S2) erreicht wird;

- den Meß- und Berechnungsvorgang nach dem darauf folgenden bekannten Zeitabstand wiederholt, wobei die korrelierten und korrigierten Daten des vorhergehenden Zeitabstands unter Berücksichtigung der geschätzten inkrementierten, aus der vom Körper zurückgelegten Trajektorie (10) abgeleiteten Werte sowie der Kalkulationen entsprechend den vorangegangen Zeitabständen, genommen werden.

- die mit jedem Paar erzielten Ergebnisse kompiliert, einerseits für die Aussendungsrichtungen (d), welche für jedes dieser Paare (5) einen Achskonus (AA') definierten und deren Schnittpunkt den Punkt, an dem der Körper (1) sich befindet, ergibt, und andererseits für die Geschwindigkeiten, welche die auf die Senkrechten projizierten Komponenten in jeder Richtung (d) der effektiven Geschwindigkeit des Körpers (1) bilden, dessen Bewegungsrichtung und Eigenwert jetzt bekannt sind.

2. Verfahren zur Trajektographie gemäß Patentanspruch 1, dadurch gekennzeichnet, daß man die von den Unterwasserschallempfängern (2) im bezeichnendsten Frequenzbereich der vom Körper (1) ausgesendeten Wellen übertragenen Signale digitalisiert.

3. Verfahren gemäß Patentanspruch 1, dadurch gekennzeichnet, daß man die Homogenität und die Kohärenz der genannten Signale durch ein Bereinigungsverfahren gewährleistet, um sich von der Stärke der genannten Signale zu befreien und nur den Informatinsinhalt zu berücksichtigen.

**Claims**

1. A process of passive trajectography of underwater objects 1, using immersed sensors 2, able to transform sound waves 4, emitted by one of the said objects into electrical signals, and a central computing unit 3, which receives the said signals and is able to process them, characterised in that, for each of at least three pairs of sensors installed in positions each one being known relation to the others.

   - at known time intervals, signals (S1 and S2) are collected, which come from two of the said sensors 2, which then constitute a pair 5, and whose distance 2 is chosen to be lower than that which separate them from the other hydrophones, and where the accurate direction of their alignment (AA') is known ;
   - one of the said signals (S1) is chosen as a reference, and is received in a time (t1) from one of the said hydrophones and signal (S2) is noted which is supposed to be representative of the same sound wave 4, emitted at the same original moment (T0) by the said object 1, and received from the other hydrophone at a time (t2) evaluated depending on a delay (T) estimated and linked to supposed direction (d0) of object 1 at the given instant of the measurement ;
   - this second signal (S2) is corrected depending on the supposed speed (V0) of the object at instant (t0), to take into account the Doppler effect, and the above supposed data is rectified until the maximum value of a function of intercorrelation between the signals (S1 and S2) is obtained ;
   - the measurement and calculation operation is performed again after the next known time interval, by taking the correlated and corrected data of the previous time interval, which is given estimated incrementation values, extrapolated depending on trajectory 10, travelled by the object and calculated for the previous time intervals.
   - the results obtained with each pair are compiled , on the one hand for the directions of emission (d) which define an axis cone (AA') for each of the pairs (5), and whose intersection gives the point where the object (1) is located, and on the other hand, for the speeds which are the components projected on the perpendiculars to each direction (d) of the real speed of object 1, whose direction of forward travel and own value are then known.

2. A process of trajectography according to claim 1, characterised in that the signals transmitted by hydrophones 2 in the most significative range of wave frequencies emitted by the said object 1 are digitalized.

3. A method according to claim 1, characterised in that the said signals are made homogeneous and coherent by a bleaching out operation allowing to get free from the power of the said signals and to retain only the informational content.

FIG.1

FIG.2

9

( 5,2 )

# FIG. 3